# FASCICULE DE BREVET EUROPEEN

(11) **EP 1 611 694 B1**
(45) Date de publication et mention de la délivrance du brevet: **26.07.2006**
(21) Numéro de dépôt: 04742416.3
(22) Date de dépôt: 31.03.2004
(51) Int. Cl.: H04B 1/52

(54) **EQUIPEMENT TERMINAL POUR LIAISON HERTZIENNE BIDIRECTIONNELLE**
ENDGERÄT FÜR BIDIREKTIONALE FUNKVERBINDUNG
TERMINAL DEVICE FOR A BI-DIRECTIONAL RADIO RELAY LINK

(30) Priorité: 08.04.2003 FR 0304425
(43) Date de publication de la demande: 04.01.2006
(73) Titulaire: FRANCE TELECOM, 75015 Paris (FR)
(72) Inventeur: DUTERTRE, Yvon, F-35690 Acigne (FR); BRUNET, François, F-35510 Cesson Sevigne (FR); LEVEQUE, Alain, F-35760 St Gregoire (FR)
(74) Mandataire: Cabinet Martinet & Lapoux
(86) Numéro de dépôt international: PCT/FR2004/000816
(87) Numéro de publication internationale: WO 2004/093338

(56) Documents cités:
- WO-A-02/19591
- US-A- 5 691 978

## Description

La présente invention concerne des équipements terminaux d'une liaison hertzienne bidirectionnelle.

Cette liaison hertzienne est principalement destinée à transmettre suivant deux directions opposées deux signaux de données numériques ayant des débits de quelques kbit/s à plusieurs centaines de Mbit/s sur une distance entre les deux équipements comprise entre quelques kilomètres et une centaine de kilomètres. Les bandes de fréquence utiles pour la transmission de ces signaux sont comprises entre 1 GHz et 100 GHz environ. Un signal de données est par exemple un signal supportant des canaux téléphoniques numériques multiplexés, ou un signal numérique pour la télévision.

Selon la technique antérieure, chaque équipement terminal comporte une antenne unique fonctionnant en émission et réception. L'antenne est reliée à la sortie d'un émetteur à travers un filtre passe-bande ayant une première bande passante et un circulateur, et à l'entrée d'un récepteur à travers le circulateur et un autre filtre passe-bande ayant une deuxième bande passante. L'émetteur transpose un premier signal de données d'une fréquence intermédiaire à une première fréquence de porteuse d'émission dans une première bande de fréquence utile prédéterminée correspondant à la première bande passante. Un deuxième signal de données avec une deuxième fréquence de porteuse et une deuxième bande de fréquence utile correspondant à la deuxième bande passante est capté par l'antenne, puis est transposé à la fréquence intermédiaire dans le récepteur.

Afin d'éviter des interférences entre les deux signaux de données, les fréquences porteuses sont différentes et plus particulièrement, les première et deuxième bandes de fréquence respectivement pour les premier et deuxième signaux de données sont juxtaposées et séparées par un intervalle de garde.

La liaison hertzienne bidirectionnelle est en général symétrique. Les deux signaux de données présentent en général un même débit et l'émetteur de l'un des équipements terminaux est appairé avec le récepteur de l'autre équipement terminal, et inversement.

Dans une autre liaison hertzienne bidirectionnelle connue par le brevet français FR 2 744 308, les signaux de données dans chaque équipement terminal sont respectivement émis et reçu avec des polarisations croisées par deux antennes dans des bandes de fréquence distinctes séparées par une bande de fréquence vierge. Une fréquence pilote sert de fréquence locale commune pour la transposition de fréquence dans les deux équipements suivant les deux sens de transmission. La fréquence pilote est transmise en tant que fréquence pure suivant une direction descendante afin de servir de fréquence porteuse de modulation centrale à la bande de fréquence suivant une direction montante.

Dans toutes ces réalisations connues, le spectre de fréquence occupé par la liaison hertzienne bidirectionnelle est au moins la somme des deux bandes de fréquence respectivement pour les deux directions de transmission.

Afin de réduire la largeur de bande de fréquence utile globale pour l'émission et la réception dans un équipement terminal d'une liaison hertzienne bidirectionnelle, le brevet US 5 691 978 propose des équipements terminaux pour liaison hertzienne bidirectionnelle à émission et réception simultanées, qui ont chacun un premier émetteur et un premier récepteur. Le premier émetteur émet un premier signal de données à une première fréquence de porteuse identique à celle à laquelle le premier récepteur reçoit un deuxième signal de données. L'équipement terminal comprend une unique antenne d'émission et de réception, ou une antenne d'émission et une antenne de réception.

Le document WO 02/19591 décrit un équipement terminal ayant deux antennes et deux liaisons hertziennes bidirectionnelles avec deux terminaux distants. La bande de fréquence d'émission et la bande de fréquence de réception utilisées pour la première liaison sont réutilisées dans la seconde: la première antenne émet dans une première bande et reçoit dans une seconde bande; la seconde antenne émet aussi dans la première bande et reçoit aussi dans le seconde bande. Cette réutilisation de fréquences implique interférence entre les antennes parce que le signal émis par un terminal distant et destiné à la première antenne est perturbant pour la seconde antenne.

L'objectif de l'invention est de fournir un équipement terminal pour liaison hertzienne bidirectionnelle transmettant quatre signaux de données sans utiliser a priori quatre bandes de fréquence et en cherchant à réduire la largeur de bande utile et le coût de l'équipement terminal.

A cette fin, un équipement terminal pour liaison hertzienne bidirectionnelle à émission et réception simultanées, ayant un premier émetteur émettant un premier signal de données dans une première bande de fréquence utile identique à celle dans laquelle un premier récepteur reçoit un deuxième signal de données (S2), est caractérisé en ce qu'il comprend
un deuxième récepteur recevant un troisième signal de données ayant une deuxième bande de fréquence utile à travers une première antenne (AA1), un premier circulateur et un filtre ayant la deuxième bande de fréquence utile pour bande passante, et ledit premier émetteur émettant ledit premier signal de données ayant la première bande de fréquence utile à travers un filtre ayant la première bande de fréquence utile pour bande passante, le premier circulateur et la première antenne, et
un deuxième émetteur émettant un quatrième signal de données ayant la deuxième bande de fréquence utile à travers un filtre ayant la deuxième bande de fréquence utile pour bande passante, un deuxième circulateur et une deuxième antenne, ledit premier récepteur recevant le deuxième signal de données ayant la première bande de fréquence utile à travers la deuxième antenne, le deuxième circulateur et un filtre ayant la première bande de fréquence utile pour bande passante.

Grâce à la mise en commun de la première bande de fréquence utile pour les premier et deuxième signaux de données et de la deuxième bande de fréquence utile pour les troisième et quatrième signaux de données, la bande de fréquence globale utile à la liaison est divisée par deux comparativement à la technique antérieure. Cette économie de bande de fréquence obtenue par l'invention permet de transmettre deux fois plus de signaux dans une bande de fréquence utile déterminée que la technique antérieure.

Comme on le verra dans la suite de la description, la séparation des premier et deuxième signaux de données émis et reçu dans la première bande de fréquence commune et la séparation des troisième et quatrième signaux de données émis et reçu dans la deuxième bande de fréquence commune sont réalisées par deux antennes distinctes respectivement pour l'émission et la réception et éventuellement par deux annuleurs de signal prévu en entrée des premier et deuxième récepteurs dans l'équipement terminal.

D'autres caractéristiques et avantages de la présente invention apparaîtront plus clairement à la lecture de la description suivante de plusieurs réalisations préférées de l'invention, à titre d'exemple, en référence aux dessins annexés correspondants dans lesquels :
- la figure 1 est un bloc-diagramme schématique d'une liaison hertzienne bidirectionnelle avec des équipements terminaux comportant des annuleurs de signal, selon la technique antérieure ;
- la figure 2 est un diagramme montrant que le signal de données émis et le signal de données reçu dans un équipement terminal selon la figure 1 ont des bandes de fréquence identiques ;
- les figures 3 et 4 sont des blocs-diagrammes schématiques d'un émetteur et d'un récepteur dans un équipement terminal, respectivement ;
- la figure 5 est un bloc-diagramme schématique d'un annuleur de signal interconnecté entre un émetteur et un récepteur dans un équipement terminal selon la figure 1;
- la figure 6 est un bloc-diagramme schématique d'une liaison hertzienne bidirectionnelle dans laquelle chaque équipement terminal selon l'invention émet deux signaux dans des bandes de fréquence différentes et reçoit deux autres signaux dans ces deux bandes de fréquence ;
- la figure 7 est une vue verticale schématique d'un pylône supportant une antenne d'émission et une antenne de réception dans un plan vertical dans un équipement terminal selon l'invention; et
- la figure 8 est un diagramme des deux bandes de fréquence différentes pour chaque équipement terminal selon l'invention.

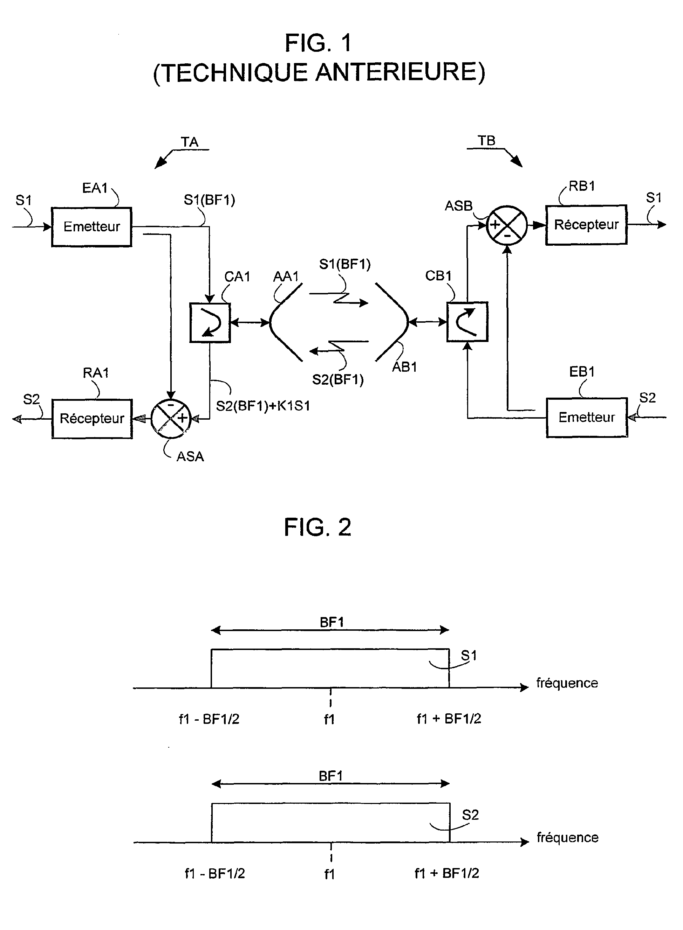

Une liaison hertzienne bidirectionnelle à émission et réception simultanées du type décrit dans le brevet US 5 691 978 est montrée à la figure 1 et comprend aux extrémités de celle-ci des équipements terminaux TA et TB.

Chaque équipement terminal TA, TB comprend essentiellement un émetteur EA1, EB1, un récepteur RA1, RB1, un circulateur à trois ports CA1, CB1, une antenne d'émission - réception AA1, AB1, et un annuleur de signal ASA, ASB.

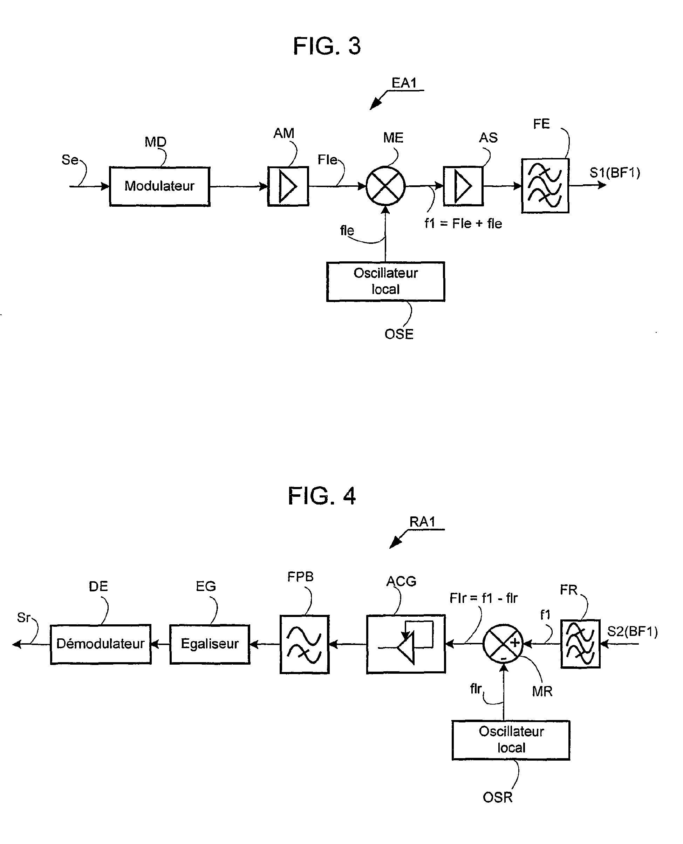

Comme montré à la figure 3, un émetteur EA1, EB1, comprend par exemple un modulateur différentiel à quatre états de phase MD pour moduler un signal de données Se à émettre. Dans l'émetteur EA1, EA2, le signal est modulé autour d'une fréquence intermédiaire FIe, puis est amplifié dans un amplificateur AM et transposé autour d'une fréquence d'émission f1 dans un mélangeur ME auquel est appliqué un signal local à fréquence fle d'un circuit à oscillateur local OSE. Le signal de données autour de la porteuse f1 est éventuellement amplifié dans un amplificateur de sortie AS et filtré dans un filtre passe-bande FE avant d'être appliqué à un port d'entrée du circulateur CA1, CB1 pour être émis par l'antenne AA1, AB1.

Comme montré à la figure 2, le signal émis S1 par l'émetteur EA1, EB1, occupe une bande de fréquence utile BF1 centrée sur la fréquence porteuse d'émission f1. Par exemple, la fréquence porteuse f1 est égale à 23 GHz, et la largeur de la bande de fréquence utile BF1 est de 28 MHz, soit une bande de fréquence utile comprise entre 22,986 GHz et 23,014 GHz, pour un signal de données de 155 Mbit/s modulé en amplitude et en phase selon une modulation MAQ à 128 états.

Le récepteur RA1, RB1, comprend par exemple, en référence à la figure 4, un mélangeur MR pour transposer en fréquence un signal de données S2 à fréquence porteuse f1 qui est reçu par l'antenne AA1, AB1 et appliqué par un port de sortie du circulateur CA1, CB1 à travers l'annuleur de signal ASA, ASB et éventuellement à travers un filtre passe-bande de réception FR et le cas échéant un amplificateur faible bruit. Le mélangeur MR transpose la fréquence de réception f1 en une fréquence intermédiaire FIr = f1 ± flr où flr désigne une fréquence locale d'un signal produit par un circuit à oscillateur local OSR. Puis le signal à fréquence intermédiaire FIr est traité par un amplificateur à commande automatique de gain ACG, un filtre passe-bas ou passe-bande FPB et un égaliseur EG avec correcteur d'erreur avant d'être démodulé, ou après, par exemple selon une démodulation à quatre états de phase, dans un démodulateur DE en un signal numérique en bande de base Sr.

Comme montré également à la figure 2, le signal reçu S2 par l'antenne AA1, AB1 appliqué au récepteur RA1 à travers l'annuleur de signal ASA, ASB présente un spectre également compris dans la bande de fréquence BF1 autour de la fréquence porteuse f1, comme pour le signal émis S1.

Un annuleur de signal, tel que l'annuleur de signal ASA dans l'équipement terminal TA, élimine une partie K1S1 du signal émis S1 réinjectée vers le récepteur RA1 dans l'équipement terminal TA et mélangée au signal reçu S2 par le circulateur CA1.

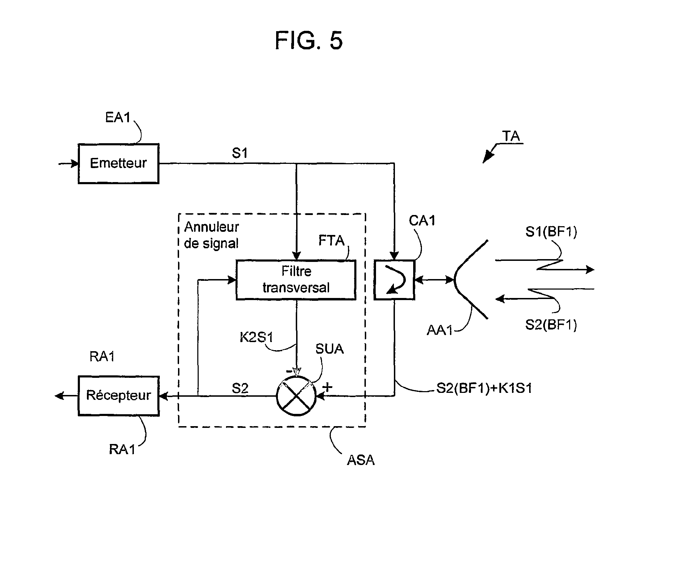

D'une manière connue, l'annuleur de signal ASA peut comprendre un filtre transversal numérique adaptatif FTA et un soustracteur SUA, comme montré à la figure 5. Le filtre transversal FTA effectue un produit de convolution entre le signal de données émis S1 prélevé à la sortie de l'émetteur EA1 et des coefficients du filtre transversal FTA représentatifs d'une réponse impulsionnelle du chemin de couplage d'émission - réception à travers le circulateur CA1 réinjectant la partie de signal émis K1S1. Le filtre transversal FTA estime une partie de signal émis synthétisée K2S1 qui est appliquée en opposition de phase à la partie de signal émis injectée K1S1 dans le soustracteur SUA interconnecté entre le port de sortie du circulateur CA1 et l'entrée du récepteur RA1.

Les coefficients K1 et K2 sont complexes, c'est-à-dire le coefficient K2 est estimé en amplitude et en phase dans le filtre transversal FTA. Le coefficient K2 est auto-adaptatif, c'est-à-dire il peut varier au cours du temps, afin que la somme K1S1 - K2S1 converge en permanence vers zéro.

L'annuleur de signal ASA peut être entièrement analogique, ou entièrement numérique, ou peut allier une partie analogique pour annuler en partie le signal K1S1 et une partie numérique pour estimer grossièrement les coefficients du filtre transversal FTA ou une partie numérique pour estimer plus précisément les coefficients afin d'affiner la correction de manière à éliminer la partie de signal émis injectée K1S1 et combinée au signal reçu S2. Ainsi la sortie du soustracteur SUA délivre un signal reçu S2 délivré de la partie de signal émis K1S1. Pour estimer le coefficient K2 en sortie du filtre transversal FTA, l'émission du signal reçu S2 dans l'équipement terminal TB peut être coupée brièvement et périodiquement afin que la partie de signal K1S1 soit seule appliquée à l'entrée positive du soustracteur SUA et un signal d'erreur produit par le soustracteur SUA et appliqué au filtre transversal FTA soit minimisé pour converger vers zéro.

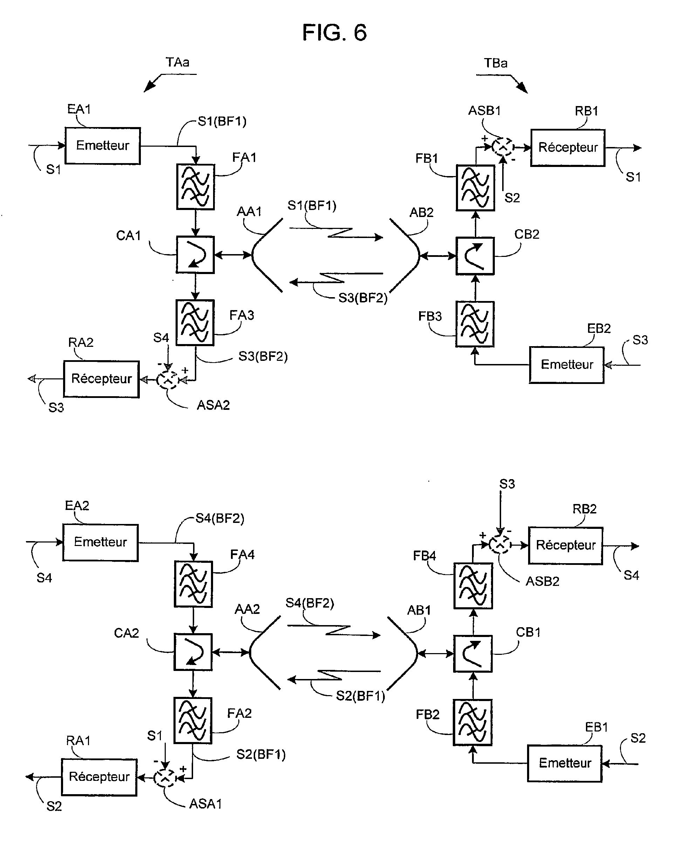

En référence maintenant à la figure 6, chaque équipement terminal TAa, TBa comprend un premier émetteur EA1, EB1 et un premier récepteur RA1, RB1 pour émettre un premier signal S1, S2 et recevoir un deuxième signal S2, S1, ces deux signaux ayant une bande de fréquence commune BF1, comme dans la deuxième réalisation montrée à la figure 6 en combinaison avec la figure 2. L'équipement terminal TAa, TBa comprend en outre un deuxième émetteur EA2, EB2 et un deuxième récepteur RA2, RB2 si bien que la liaison hertzienne bidirectionnelle entre les équipements terminaux TAa et TBa est double. Cette double liaison hertzienne bidirectionnelle est ainsi composée :
d'une première liaison hertzienne bidirectionnelle à émission et réception simultanées dans laquelle le premier signal de données modulé S1 ayant la première bande de fréquence BF1 et la fréquence de porteuse f1 est émis depuis l'émetteur EA1 vers le récepteur RB1 à travers les antennes directives AA1 et AB2 et un troisième signal de données modulé S3 ayant une deuxième bande de fréquence BF2 est émis depuis l'émetteur EB2 et reçu par le récepteur RA2 à travers les antennes AB2 et AA1, et
d'une deuxième liaison hertzienne bidirectionnelle à émission et réception simultanées dans laquelle l'émetteur EA2 émet un quatrième signal de données modulé S4 ayant la deuxième bande de fréquence BF2 et la fréquence de porteuse f2 à travers l'antenne directive AA2 et est reçu par le récepteur RB2 à travers l'antenne directive AB1, et le deuxième signal de données modulé S2 ayant la première bande de fréquence BF1 est émis par l'émetteur EB1 à travers l'antenne AB1 et reçu par le récepteur RA1 à travers l'antenne AA2.

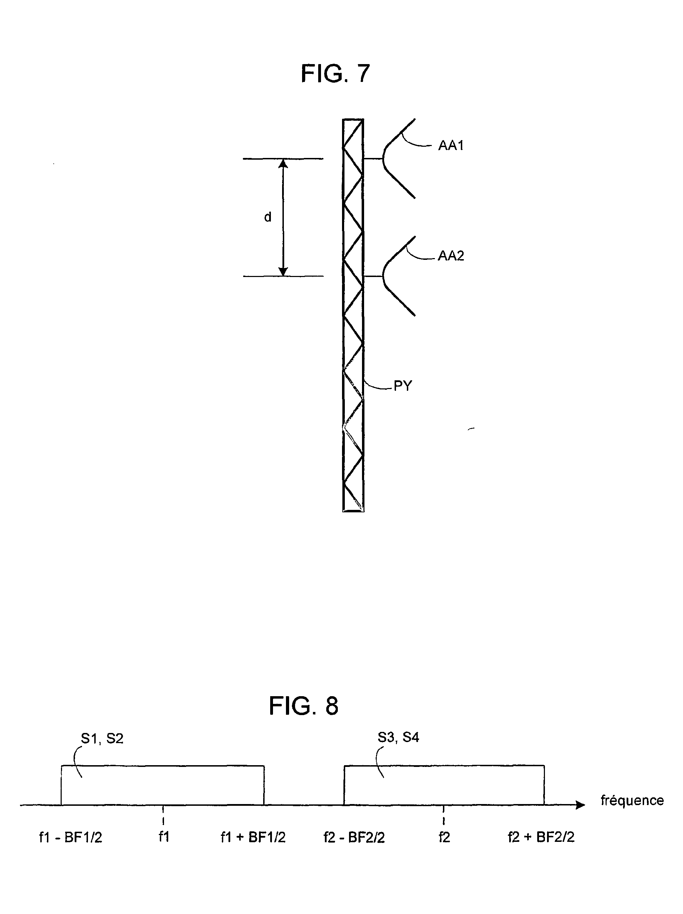

Comme montré à la figure 8, les deux bandes de fréquence utiles BF1 et BF2 sont juxtaposées avec un intervalle de garde de l'ordre de 10 MHz à 1000 MHz et sont utilisées chacune à la fois pour émettre et recevoir deux signaux S1 et S2, S3 et S4, dans chaque équipement terminal TAa, TBa, mais à travers deux antennes distinctes AA1 et AA2, AB1 et AB2.

Comme montré à la figure 7, les antennes AA1 et AA2 dans chaque équipement terminal TAa, TBa sont disposées dans un plan perpendiculaire aux directions de propagation parallèles des deux signaux émis et des deux signaux reçus.

Les antennes AA1 et AA2, AB1 et AB2 peuvent être superposées dans un plan le long d'une verticale au sommet d'un pylône de télécommunications PY. En variante, les antennes AA1 et AA2, AB1 et AB2 au sommet du pylône sont juxtaposées horizontalement à la même hauteur par rapport au sol.

Afin qu'une partie, telle que K1S1, du signal émis S1, S4 ne perturbe pas le traitement du signal reçu S2, S3 dans le récepteur de chaque équipement terminal, tel que l'équipement terminal TAa, et afin que les antennes soient relativement découplées, la distance d entre les antennes AA1 et AA2 est d'autant plus réduite que la fréquence respective f1, f2 de ces signaux est élevée. Pour une fréquence f1, f2 supérieure au gigahertz, la distance d est de quelques dizaines de centimètres. Typiquement, pour un diamètre d'antenne de 15 cm, la distance d est de 60 cm environ, soit de l'ordre de quelques longueurs d'onde à quelques dizaines de longueurs d'onde. Pour des fréquences inférieures au gigahertz la distance d est de plus d'un mètre. Dans tous les cas, on veillera à ce que le signal perturbant rayonné latéralement par la première antenne AA1 et capté par la deuxième antenne AA2 soit tel que le rapport signal utile sur signal perturbant soit suffisant en fonction de la modulation de transmission et de la qualité de transmission requises.

Le cas échéant lorsque les antennes AA1 et AA2, AB1 et AB2 sont proches et/ou peu directives, chaque équipement terminal TAa, TBa comprend de préférence un annuleur de signal ASA1 et ASA2, ASB1 et ASB2 comme montré en traits pointillés à la figure 6. L'annuleur de signal ASA1, ASB1 est analogue à celui décrit en référence à la figure 5 et annule une partie du signal S1, S2 émis par l'antenne AA1, AB1, captée par l'antenne AA2, AB2, et l'annuleur de signal ASA2, ASB2 est analogue à celui décrit en référence à la figure 5 et annule une partie du signal S4, S3 émis par l'antenne AA1, AB1, captée par l'antenne AA2, AB2.

Ainsi dans chaque équipement terminal TAa, TBa, on retrouve deux agencements entre émetteur et récepteur et antenne analogues à l'agencement entre l'émetteur, le récepteur et l'antenne dans un équipement terminal selon la première réalisation montrée à la figure 1, mais en plus avec des filtres passe-bande. Par exemple, dans chacun des agencements de l'équipement terminal TAa relatifs aux deux liaisons hertziennes bidirectionnelles S1-S3 et S4-S2, l'émetteur EA1, EA2 émet le signal de données modulé S1, S4 à travers un filtre passe-bande FA1, FA4, un circulateur à trois ports CA1, CA2 et l'antenne directive AA1, AA2, et le récepteur RA2, RA1 reçoit le signal de données S3, S2 depuis l'antenne directive AA1, AA2 à travers le circulateur CA1, CA2 et un filtre passe-bande FA3, FA2. Les filtres passe-bande FA1 et FA2 ainsi que des filtres passe-bande FB1 et FB2 en entrée du récepteur RB1 et en sortie de l'émetteur EB1 dans l'équipement terminal TBa ont des bandes passantes identiques à la première bande de fréquence BF1 des premier et deuxième signaux de données S1 et S2. Les filtres passe-bande FA3 et FA4 ainsi que des filtres passe-bande FB3 et FB4 en sortie de l'émetteur EB2 et en entrée de récepteur RB4 dans l'équipement terminal TBa ont des bandes passantes identiques à la deuxième bande de fréquence utile BF2 des troisième et quatrième signaux de données S3 et S4. Dans chacun des deux agencements d'émetteur-récepteur dans l'équipement terminal TAa, les deux filtres passe-bande FA1 et FA3, FA4 et FA2 et le circulateur CA1, CA2 constituent un duplexeur.

Ainsi l'émetteur EA1, EA2, le récepteur RA2, RA1 et le duplexeur FA1-CA1-FA3, FA4-CA2-FA2 avec l'antenne AA1, AA2 constituent ensemble un équipement terminal classique du commerce, ce qui réduit considérablement le coût de la liaison hertzienne bidirectionnelle selon la figure 8, bien que celle-ci présente un spectre réduit à deux bandes de fréquence BF1 et BF2 pour transmettre quatre signaux de données S1, S2, S3 et S4, au lieu de quatre bandes de fréquence selon la technique antérieure.

## Revendications

1. Equipement terminal (TAa) pour liaison hertzienne bidirectionnelle à émission et réception simultanées, ayant un premier émetteur (EA1) adapté pour émettre un premier signal de données (S1) dans une première bande de fréquence utile (BF1) identique à celle dans laquelle un premier récepteur (RA1) reçoit un deuxième signal de données (S2), **caractérisé en ce qu'**il comprend
un deuxième récepteur (RA2) adapté pour recevoir un troisième signal de données (S3) ayant une deuxième bande de fréquence utile (BF2) à travers une première antenne (AA1), un premier circulateur (CA1) et un filtre (FA3) ayant la deuxième bande de fréquence utile (BF2) pour bande passante, et ledit premier émetteur (EA1) adapté pour émettre ledit premier signal de données (S1) ayant la première bande de fréquence utile (BF1) à travers un filtre (FA1) ayant la première bande de fréquence utile (BF1) pour bande passante, le premier circulateur et la première antenne, et
un deuxième émetteur (EA2) adapté pour émettre un quatrième signal de données (S4) ayant la deuxième bande de fréquence utile (BF2) à travers un filtre (FA4) ayant la deuxième bande de fréquence utile (BF2) pour bande passante, un deuxième circulateur (CA2) et une deuxième antenne (AA2), ledit premier récepteur (RA1) adapté pour recevoir le deuxième signal de données (S2) ayant la première bande de fréquence utile (BF1) à travers la deuxième antenne, le deuxième circulateur et un filtre (FA2) ayant la première bande de fréquence utile (BF1) pour bande passante.

## Claims

1. Terminal equipment (TAa) for a bidirectional radio link, with simultaneous sending and receiving, having a first transmitter (EA1) adapted to transmit a first data signal (S1) in a first payload frequency band (BF1) identical to that in which a first receiver (RA1) receives a second data signal (S2), **characterized in that** it comprises:
a second receiver (RA2) adapted to receive a third data signal (S3) having a second payload frequency band (BF2) via a first antenna (AA1), a first circulator (CA1) and a filter (FA3) having the second payload frequency band (BF2) as pass band, said first transmitter (EA1) being adapted to transmit said first data signal (S1) having the first payload frequency band (BF1) via a filter (FA1) having the first payload frequency band (BF1) as pass band, the first circulator and the first antenna, and
a second transmitter (EA2) adapted to transmit a fourth data signal (S4) having the second payload frequency band (BF2) via a filter (FA4) having the second payload frequency band (BF2) as pass band, a second circulator (CA2) and a second antenna (AA2), said first receiver (RA1) being adapted to receive the second data signal (S2) having the first payload frequency band (BF1) via the second antenna, the second circulator and a filter (FA2) having the first payload frequency band (BF1) as pass band.

## Patentansprüche

1. Endeinrichtung (TAa) für eine Zweiwege-Funkverbindung mit gleichzeitigem Senden und Empfangen, mit einem ersten Sender (EA1), der ausgelegt ist, um ein erstes Datensignal (S1) in einem ersten Nutzfrequenzband (BF1) gleich dem zu senden, in dem ein erster Empfänger (RA1) ein zweites Datensignal (S2) empfängt, **dadurch gekennzeichnet, dass** sie
einen zweiten Empfänger (RA2), der ausgelegt ist, um ein drittes Datensignal (S3) in einem zweiten Nutzfrequenzband (BF2) über eine erste Antenne (AA1), einen ersten Zirkulator (CA1) und ein Filter (FA3) zu empfangen, dessen Durchlassband das zweite Nutzfrequenzband (BF2) ist, und der erste Sender (EA1) ausgelegt ist, um das erste Datensignal (S1) im ersten Nutzfrequenzband (BF1) über ein Filter (FA1), dessen Durchlassband das erste Nutzfrequenzband (BF1) ist, den ersten Zirkulator und die erste Antenne zu senden, und
einen zweiten Sender (EA2) aufweist, der ausgelegt ist, um ein viertes Datensignal (S4) im zweiten Nutzfrequenzband (BF2) über ein Filter (FA4), dessen Durchlassband das zweite Nutzfrequenzband (BF2) ist, einen zweiten Zirkulator (CA2) und eine zweite Antenne (AA2) zu senden, wobei der erste Empfänger (RA1) ausgelegt ist, um das zweite Datensignal (S2) im ersten Nutzfrequenzband (BF1) über die zweite Antenne, den zweiten Zirkulator und ein Filter (FA2) zu empfangen, dessen Durchlassband das erste Nutzfrequenzband (BF1) ist.
